# EUROPEAN PATENT APPLICATION

(11) **EP 3 913 454 A1**
(43) Date of publication of application: **24.11.2021**
(21) Application number: 19910174.2
(22) Date of filing: 18.09.2019
(51) Int. Cl.: G05D 1/02

(54) **ROUTE MANAGEMENT SYSTEM AND MANAGEMENT METHOD THEREOF**

(30) Priority: 18.01.2019 CN 201910049062; 13.03.2019 CN 201910187488
(71) Applicant: FJ Dynamics Technology Academy (Chang Zhou) Co., Ltd., Changzhou, Jiangsu 213001 (CN)
(72) Inventor: QIN, Shuo, Changzhou, Jiangsu 213001 (CN); QI, Jiayuan, Changzhou, Jiangsu 213001 (CN); XU, Bing, Changzhou, Jiangsu 213001 (CN); WANG, Xiaodong, Changzhou, Jiangsu 213001 (CN)
(74) Representative: Zaboliene, Reda
(86) International application number: PCT/CN2019/106299
(87) International publication number: WO 2020/147326

(57) **Abstract**

A route management system (100) and a management method thereof. The route management system (100) is used for at least one agricultural machine (202) to provide an operation route for the operation of the agricultural machine (202), and includes an environment analyzing module (102) and an operating route planning module (103). The environment analyzing module (102) analyzes the information of at least one to-be-operated area (201) and generates at least one environment data. The operating route planning module (103) is communicatively connected to the environment analyzing module (102) to plan, according to the environment data, at least one operating route of the to-be-operated area (201). The agricultural machine (202) can operate in the to-be-operated area (201) according to the operation route.

## Description

### FIELD

The subject matter relates to field of agricultural machine, and more particularly, to a route management system, and a route management method for an agricultural machine.

### BACKGROUND

With the development of modern agriculture, rate of agricultural mechanization is getting higher and higher, and agricultural machineries are widely used in farmlands. However, the automation rate of the agricultural machineries is not very high, and operation of these agricultural machineries still heavily relies on manual operation.

The agricultural machine working in farmland needs to be driven by a driver. A driving route of the agricultural machine is determined by the driver. The driver chooses the route and the direction according to his own knowledge of the farmland. However, the area of the farmland may be very large, and the environmental conditions of the farmland may change. The driver may not fully and timely understand all the conditions of the farmland. The driver may suddenly encounters conditions, such as puddles temporarily occurs due to weather and undiscovered rocks, after the agricultural machine is driven into the farmland. The driver, when suddenly encounters with such conditions in the farmland, may not make correct responses in time but instead drives the agricultural machine to perform operations such as backing, turning around, changing directions, and re-selecting the route on the farmland. However, the backing, turning, or changing directions of the agricultural machine may cause damages to the farmland that has already been worked on. For example, when the agricultural machine works in one single direction and then encounters obstacles that cannot be surpassed or avoided in the front side, the backing of the agricultural machine may damage the crops in the rear side. Therefore, when the area where the agricultural machine needs to be operated is not fully surveys immediately before entering the farmland, unnecessary losses may be caused during operation.

Furthermore, the area of farmland may be very large, and a certain amount of time and experience are needed for the driver to get to know the environmental conditions of farmland. However, human knowledge of farmland cannot be updated in time as the environmental changes, and lag thereof may cause errors or accidents during the operation of the agricultural machine.

### BRIEF DESCRIPTION OF THE DRAWINGS

FIG. 1 is a block diagram of a route management system according to an embodiment of the present disclosure.
FIG. 2 is a diagrammatic view of a route management system according to an embodiment of the present disclosure.
FIG. 3 is a flowchart of a route management method according to an embodiment of the present disclosure.
FIG. 4 is sub-flowchart of a route management method according to another embodiment of the present disclosure.
FIG. 5 is a diagrammatic view of a route management method according to another embodiment of the present disclosure.
FIG. 6 is a sub-flowchart of a route management method according to yet another embodiment.
FIG. 7 is a diagrammatic view of a route management method according to yet another embodiment.
FIG. 8 is a diagrammatic view of a route management method according to other embodiments.

### SUMMARY

To overcome the above shortcomings, a route management system and a route management method are needed.

The present disclosure provides a route management system for at least one agricultural machine, including: an environment analyzing module configured to analyze environmental information of at least one to-be-operated area and generate environmental data; an operating route planning module communicatively connected to the environment analyzing module, the operating route planning module configured to plan at least one operating route on the to-be-operated area according to the environmental data.

According to an embodiment of the present disclosure, the route management system further includes an environment obtaining module communicatively connected to at least one monitoring device, the monitoring device configured to monitor the to-be-operated area, the environment obtaining module configured to obtain the environmental information of the to-be-operated area from the monitoring device, and send the environmental information to the environment analyzing module.

According to an embodiment of the present disclosure, the environment analyzing module includes a boundary analyzing submodule configured to identify a boundary of the to-be-operated area according to the environmental information of the to-be-operated area from the environment obtaining module, and the boundary analyzing submodule further configured to analyze a shape of the to-be-operated area and a size of the boundary.

According to an embodiment of the present disclosure, the environment analyzing module includes a movable surface identifying submodule configured to identify a movable surface on the to-be-operated area according to the environmental information of the to-be-operated area from the environment obtaining module.

According to an embodiment of the present disclosure, the environment analyzing module includes an operable surface analyzing submodule configured to identify an operable surface of the to-be-operated area according to the environmental information of the to-be-operated area from the environment obtaining module.

According to an embodiment of the present disclosure, the environment analyzing module includes an obstacle surface generating submodule configured to generate an obstacle surface of the to-be-operated area according to the environmental information of the to-be-operated area from the environment obtaining module.

According to an embodiment of the present disclosure, the environment analyzing module includes a feedback submodule configured to obtain the shape of the to-be-operated area and the size of the boundary from the boundary analyzing submodule, obtain the moving surface from the moving surface identifying submodule, obtain the operable surface from the operable surface analyzing submodule, obtain the obstacle surface from the obstacle surface generating submodule, and generate the environmental data of the to-be-operated area accordingly; the feedback submodule further configured to feedback the environmental data to the operating route planning module.

According to an embodiment of the present disclosure, the environment analyzing module includes a feedback submodule configured to obtain the shape of the to-be-operated area and the size of the boundary from the boundary analyzing submodule, obtain the moving surface from the moving surface identifying submodule, obtain the operable surface from the operable surface analyzing submodule, obtain the obstacle surface from the obstacle surface generating submodule, and generate the environmental data of the to-be-operated area accordingly. The feedback submodule is further configured to feedback the environmental data to the operating route planning module.

According to an embodiment of the present disclosure, the operating route planning module is configured to obtain the shape of the to-be-operated area and the size of the boundary, and the operating route planning module is configured to plan the operating route according to the shape of the to-be-operated area and the size of the boundary.

According to an embodiment of the present disclosure, the operating route planning module is configured to obtain the shape of the to-be-operated area and the size of the boundary, and the operating route planning module is configured to plan the operating route according to the shape of the to-be-operated area and the size of the boundary.

According to an embodiment of the present disclosure, the operating route planning module is configured to analyze an obstacle avoiding mode according to the obstacle surface of the environmental data, and plan the operating route of the to-be-operated area.

According to an embodiment of the present disclosure, the operating route planning module is configured to analyze an obstacle avoiding mode according to the obstacle surface of the environmental data, and plan the operating route of the to-be-operated area.

According to an embodiment of the present disclosure, the route management system further includes a monitoring module configured to monitor a position of the agricultural machine, and obtain the to-be-operated area according to the position of the agricultural machine.

According to an embodiment of the present disclosure, the route management system further includes a calling module communicatively connected to the monitoring module, the calling module configured to obtain the position of the agricultural machine and the to-be-operated area, when the monitoring module monitors that the agricultural machine reaches the to-be-operated area, the calling module is further configured to call the operating route to be executed by the agricultural machine.

Another aspect of the present disclosure further provides a route management method for at least one agricultural machine, including (A) generating environmental data based on environmental information of at least one to-be-operated area; and (B) planning at least one operating route on the to-be-operated area according to the environmental data.

According to an embodiment of the present disclosure, the step (A) includes obtaining the environmental information of the to-be-operated area by at least one monitoring device; identify the boundary of the to-be-operated area; analyzing the shape of the to-be-operated area and the size of the boundary; and generating the environmental data of the to-be-operated area.

According to an embodiment of the present disclosure, the step (B) includes planning the operation route according to the shape of the to-be-operated area and the size of the boundary.

According to an embodiment of the present disclosure, the step (A) includes obtain the environmental information of the to-be-operated area through at least one monitoring device; identify an obstacle surface, a movable surface, and an operable surface of the to-be-operated area; and generating the environmental data.

According to an embodiment of the present disclosure, the step (B) includes planning at least one obstacle avoiding mode according to the obstacle surface; and generating the operating route.

### DETAILED DESCRIPTION

The following description is used to disclose the present disclosure so that those skilled in the art can implement the present disclosure. The preferred embodiments in the following description are only examples, and those skilled in the art can think of other obvious variations. The basic principles of the present disclosure defined in the following description can be applied to other embodiments, modifications, improvements, equivalents, and other technical solutions that do not deviate from the spirit and scope of the present disclosure.

Those skilled in the art should understand that, in the disclosure of the present disclosure, an orientation or a positional relationship indicated by the terms "longitudinal", "lateral", "upper", "lower", "front", "rear", "left", "right", "vertical", "horizontal", "top", "bottom", "inner", "outer", etc. is based on the orientation or the positional relationship shown in the drawings, which is only for the convenience of describing the present disclosure and simplify the description, rather than indicating or implying a device or an element must have a specific orientation, and is constructed and operated in a specific orientation, so the above terms should not be understood as a limitation of the present disclosure.

It can be understood that the term "a" should be understood as "at least one" or "one or more", that is, in one embodiment, the number of a kind of element may be one, and in another embodiment, the number of the kind of element can be more than one, and the term "one" cannot be understood as a restriction on the number.

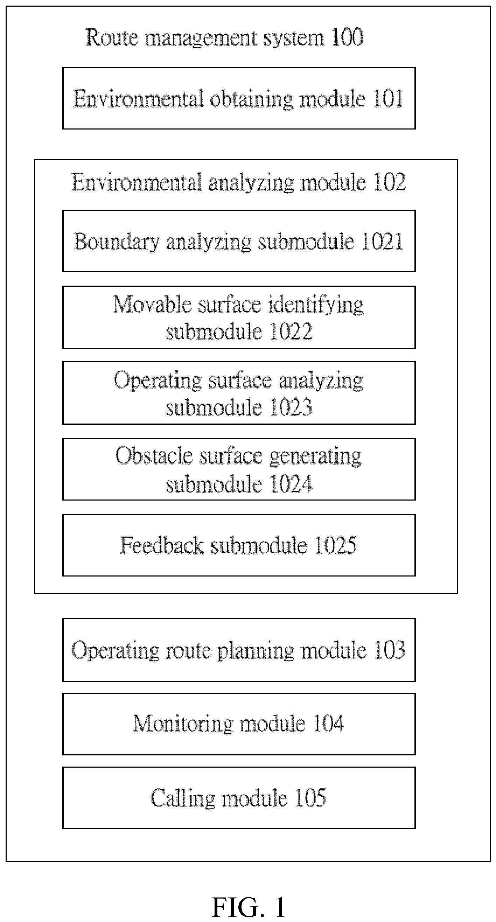

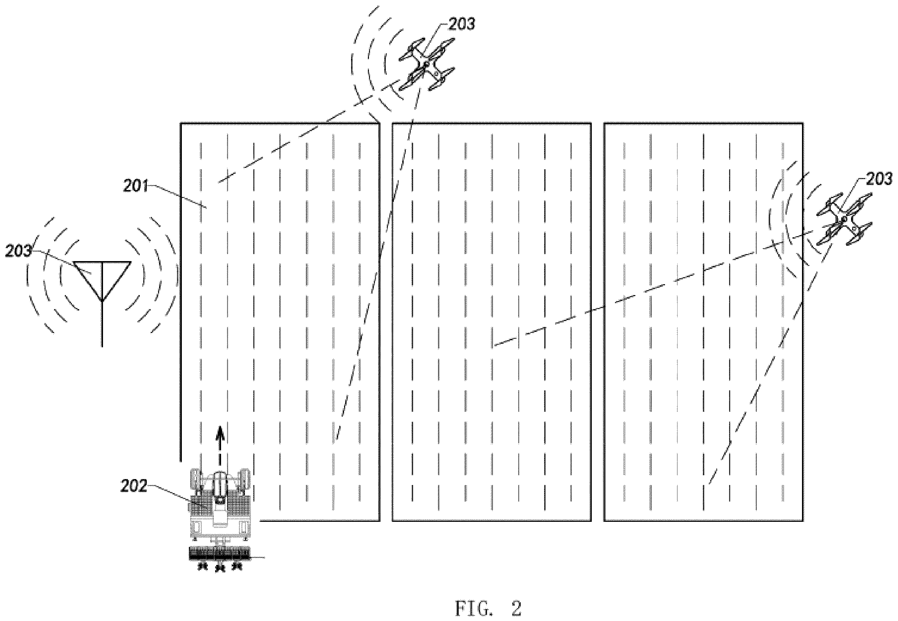

Referring to FIGS. 1 and 2, a route management system 100 is provided according to an embodiment of the present disclosure. The route management system 100 can analyze environmental information of at least one to-be-operated area 201, and plan an operation route on the to-be-operated area 201 for at least one agricultural machine 202. The agricultural machine 202 can then move and operate on the to-be-operated area 201 according to the operation route planned by the route management system 100.

The route management system 100 includes an environment obtaining module 101 communicatively connected to at least one monitoring device 203. The monitoring device 203 can monitor at least one to-be-operated area 201 to obtain the environmental information of the to-be-operated area 201. For example, the monitoring device 203 monitors a farmland to captures pictures or infrared images of the farmland, so that the environment obtaining module 101 can obtain the environmental information of the to-be-operated area 201 accordingly.

The route management system 100 further includes an environment analyzing module 102 communicatively connected to the environment obtaining module 101. The environment analyzing module 102 can obtain the environmental information of the to-be-operated area 201 from the environment obtaining module 101. The environment analyzing module 102 further analyzes the environmental information of the to-be-operated area 201, and generates environmental data of the to-be-operated area 201 accordingly. In an embodiment, the environment analyzing module 102 analyzes the boundary and the shape of the to-be-operated area 201, and generates the environmental data accordingly. In another embodiment, the environment analyzing module 102 analyzes a surface that can be moved on (movable surface), a surface that having obstacles thereon (obstacle surface), a surface that can be operated on (operable surface), and a surface that cannot be operated on (inoperable surface) of the to-be-operated area 201 according to information of the to-be-operated area 201, and generates the environmental data of the to-be-operated area 201. When the environment analyzing module 102 generates a number of environmental data by analyzing the information of a number of to-be-operated areas 201, the environment analyzing module 102 further identifies each environmental data with the corresponding to-be-operated area 201, so that the environmental data corresponding to the to-be-operated areas 201 can be distinguished from each other.

The environment analyzing module 102 includes a boundary analyzing submodule 1021 communicatively connected to the environment obtaining module 101. The boundary analyzing submodule 1021 obtains the environmental information of the to-be-operated area 201 from the environment obtaining module 101. The boundary analyzing submodule 1021 identifies the boundary of the to-be-operated area 201. For example, the environment obtaining module 101 obtains the images of the to-be-operated area 201 through the monitoring device 203. The boundary analyzing submodule 1021 identifies and determines the boundary of the to-be-operated area 201 according to the images of the to-be-operated area 201. For example, according to the images of the to-be-operated area 201 from the environment obtaining module 101, the boundary analyzing submodule 1021 identifies the ridge of the to-be-operated area 201 as the boundary of the to-be-operated area 201. The boundary analyzing submodule 1021 further analyzes the shape of the to-be-operated area 201 according to the boundary of the to-be-operated area 201. In other embodiments, the environment analyzing module 1021 identifies any obstacle on the to-be-operated area 201 according to the images of the to-be-operated area 201 from the environment obtaining module 101, and determines the position and/or the shape of the obstacle as the boundary of the to-be-operated area 201.

The boundary analyzing submodule 1021 analyzes the size of the boundary of the to-be-operated area 201, so as to determine a length, a width, and other information of the boundary of the to-be-operated area 201.

The environment analyzing module 102 further includes a movable surface identifying submodule 1022 communicatively connected to the environment obtaining module 101. The movable surface identifying submodule 1022 identifies the movable surface of the to-be-operated area 201 according to the information of the to-be-operated area 201 from the environment obtaining module 101.

For example, the movable surface identifying submodule 1022 identifies the surface where the agricultural machine 202 can move on according to the information of the to-be-operated area 201 from the environment obtaining module 101, so as to generate the movable surface of the to-be-operated area 201. The movable surface identifying submodule 1022 identifies a surface on the to-be-operated area 201, where the agricultural machine 201 can pass through without damages to the crops, to be the movable surface on the to-be-operated area 201.

The environment analyzing module 102 further includes an operable surface analyzing submodule 1023 communicatively connected to the environment obtaining module 101. The operable surface analyzing submodule 1023 identifies the operable surface of the to-be-operated area 201, which requires the agricultural machine 202 to operate on, according to the information from the environment obtaining module 101.

Optionally, the operable surface analyzing submodule 1023 may also identify the surface of the to-be-operated area 201 that does not require operations thereon to be the inoperable surface.

The environment analyzing module 102 also includes an obstacle surface generating submodule 1024 communicatively connected to the environment obtaining module 101. The obstacle surface generating submodule 1024 identifies a surface on the to-be-operated area 201, that hinders the movement of the agricultural machine 202, to be the obstacle surface of the to-be-operated area 201 according to the information of the to-be-operated area 201 from the environment obtaining module 101. For example, according to the information of the to-be-operated area 201 from the environment obtaining module 101, when the obstacle surface generating submodule 1024 identifies rocks, highlands, pits, and water pools on the to-be-operated area 201 that hinder the movement of the agricultural machine 202, the obstacle surface generating submodule 1024 generates the surface as the obstacle surface of the to-be-operated area 201.

The environment analyzing module 102 further includes a feedback submodule 1025. The feedback submodule 1025 obtains the boundary and the shape of the to-be-operated area 201 from the boundary analyzing submodule 1021, obtains movable surface of the to-be-operated area 201 from the movable surface identifying submodule 1022, obtains the operable surface of the to-be-operated area 201 from the operable surface analyzing submodule 1023, and obtains the obstacle surface of the to-be-operated area 201 from the obstacle surface generating submodule 1024. The feedback submodule 1025 further generates the environmental data of the to-be-operated area 201 according to the boundary and the shape, the operable surface, the movable surface, and the obstacle surface of the to-be-operated area 201.

The route management system 100 further includes an operating route planning module 103 communicatively connected to the environment analyzing module 102. The operating route planning module 103 can obtain the environmental data of the to-be-operated area 201. The feedback submodule 1025 feeds back the environmental data to the operating route planning module 103. The operating route planning module 103 obtains the shape, the movable surface, the obstacles, and the operable surface of the to-be-operated area 201 according to the environmental data. The operating route planning module 103 further plans how the agricultural machine 202 moves and operates on the movable surface, and plans the route of the agricultural machine 202 for avoiding the obstacle surface. That is, the operating route planning module 103 generates at least one operating route 204 suitable for the to-be-operated area 201.

When the operating route planning module 103 plans the operating routes 204 for a number of to-be-operated areas 201, the operating route planning module 103 identifies each of the operating routes 204 with the corresponding to-be-operated area 201, so as to identify the operating route 204 applicable to each to-be-operated area 201.

The route management system 100 further includes a monitoring module 104 and a calling module 105. The monitoring module 104 is communicatively connected to the agricultural machine 202 to monitor whether the agricultural machine 202 is ready for operation. When the monitoring module 104 monitors that the agricultural machine 202 moves to the to-be-operated area 201, the monitoring module 104 obtains the to-be-operated area 201. The calling module 105 is communicatively connected to the monitoring module 104 to obtain the to-be-operated area 201 where the agricultural machine 202 is ready for operation. The calling module 105 is also communicatively connected to the operating route planning module 103 to call the operating route 204 applicable to the to-be-operated area 201 from the operating route planning module 103. Then, the agricultural machine 202 can operate on the to-be-operated area 201 according to the operation route 204 called by the calling module 105.

The monitoring module 104 monitors a current position of the agricultural machine 202 to analyze whether the agricultural machine 202 moves to the to-be-operated area 201. When the monitoring module 104 detects that the agricultural machine 202 is approaching the to-be-operated area 201 and about to enter the to-be-operated area 201, the calling module 105 calls the operating route 204 for the agricultural machine 202, thereby allowing the agricultural machine 202 to execute the operating route 204 and operate on the to-be-operated area 201.

When the monitoring module 104 monitors that the agricultural machine 202 reaches the to-be-operated area 201, the agricultural machine 202 automatically executes the operation route 204 called by the calling module 105, and operates on the to-be-operated area 201 according to the operating route 204. When the monitoring module 104 monitors that the agricultural machine 201 is located in the to-be-operated area 201, the calling module 105 calls the operating route 204, and the agricultural machine 201 executes the operating route 204 at the current position.

The monitoring device 203 monitors the to-be-operated area 201. The monitoring device 203 can be a drone, a base station, a satellite, or a combination thereof. The drone monitors the to-be-operated area 201 when flying over the to-be-operated area 201. The drone obtains the information of the to-be-operated area 201 so that the environment analyzing module 102 can analyze the environmental data of the to-be-operated area 201. The drone can be equipped with a camera device, an infrared device, etc., to detect the to-be-operated area 201. When the monitoring device 203 is one or more base stations, the one or more base stations are set up inside or adjacent to the to-be-operated area 201 to monitor the to-be-operated area 201, so that the environment obtaining module 101 can obtain the information of the to-be-operated area 201. The base station monitors, identifies, or scans the to-be-operated area 201, and obtains the information of the to-be-operated area 201.

When the monitoring device 203 is a satellite, the environment obtaining module 101 obtains the images of the to-be-operated area 201 through the satellite to obtain the information of the to-be-operated area 201. The satellite can transmit information of the to-be-operated area 201 or the region where the to-be-operated area 201 is located in to the environment obtaining module 101, and the information including photos, geological images, infrared images, etc.

The environment obtaining module 101 can obtain the information of the to-be-operated area 201 from the monitoring device 203, such as the drone, the base station, the satellite, or the combination thereof, so that the environment analyzing module 102 can analyze the to-be-operated area 201 and generate the environmental data accordingly.

The environment analyzing module 102 analyzes, according to the information from the environment obtaining module 101, the movable surface of the to-be-operated area 201 that the agricultural machine 202 can move on, the obstacle surface that the agricultural machine 202 cannot move on, the boundary of the to-be-operated area 201, the operable surface that the agricultural machine 202 needs to operate on, the inoperable surface that the agricultural machine 202 does not need to operate on, and the inoperable surface that has already been operated on. The environmental data is then generated.

The operating route planning module 103 plans the operating route 204 according to the environmental data. Preferably, the operating route planning module 103 plans the operating route 204 on the to-be-operated area 201 according to the movable surface, the operable surface, the obstacle surface, the boundary of the to-be-operated area 201, and the inoperable surface of the environmental data.

The operating route 204 planned by the operating route planning module 103 is suitable for the agricultural machine 202 to move and operate on the to-be-operated area 201 after entering the to-be-operated area 201. The to-be-operated area 201 may be a piece of farmland or multiple pieces of farmland connected together.

The environment obtaining module 101 can obtain information of a piece of farmland, and can also obtain information of multiple pieces of farmland. The environment analyzing module 102 analyzes the information of the piece of farmland to generate the environmental data of the piece of farmland. The environment analyzing module 102 can also analyze information of multiple pieces of farmland to generate the environmental data. The environment analyzing module 103 assigns the environmental data to each piece of farmland. The environment analyzing module 103 may also take multiple pieces of farmland as a whole to-be-operated area 201 and assign the environmental data thereto.

The operating route planning module 103 plans the operating route 204 on the to-be-operated area 201. The operating route planning module 103 analyzes the boundary of the to-be-operated area 201 according to the environmental data from the environment analyzing module 102 to obtain the shape of the to-be-operated area 201.

For example, the monitoring device 203 monitors the to-be-operated area 201. The monitoring device 203 obtains the information of the to-be-operated area 201, and the environment analyzing module 102 generates the environmental data. The environment analyzing module 102 sends the environmental data to the operating route planning module 103. The operating route planning module 103 analyzes that the to-be-operated area 201 is a square farmland according to the environmental data, and the operating route planning module 103 plans the operating route 204 according to the shape of the to-be-operated area 201.

In another embodiment, the operating route planning module 103 analyzes how to avoid the obstacle according to the obstacle surface of the environmental data, and plans the operating route 204 accordingly.

In another embodiment, the environment analyzing module 102 generates the environmental data of the to-be-operated area 201 according to the movable surface, the operable surface, the obstacle surface, etc., and feeds them back to the operating route planning module 103. The operating route planning module 103 plans the operating route 204 according to the movable surface, the operable surface, and the obstacle surface of the environmental data.

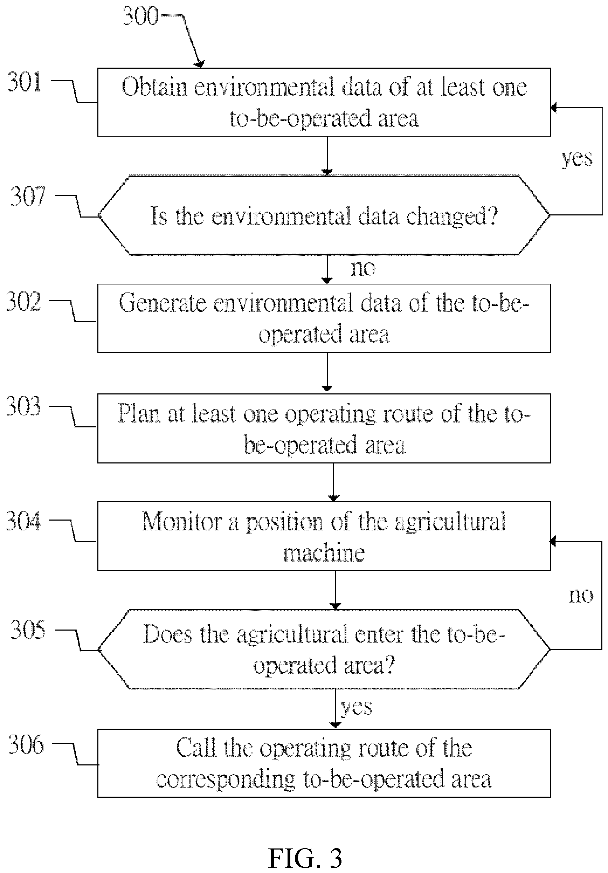

A route management method 300 is also provided according to an embodiment of the present disclosure, which is executed by the route management system 100. Referring to FIG. 3, the route management method 300 includes following steps.

Step 301: the environmental information of at least one to-be-operated area 201 is obtained. The monitoring device 203 monitors the to-be-operated area 201 to generate the information of the to-be-operated area 201. The environment obtaining module 101 obtains the information of the to-be-operated area 201 from the monitoring device 203.

Step 302: the environmental data of the to-be-operated area 201 is generated. The environment analyzing module 102 obtains the information of the to-be-operated area 201 from the environment obtaining module 101. The environment analyzing module 102 analyzes the information of the to-be-operated area 201 to generate the environmental data of the to-be-operated area 201.

Step 303: the at least one operating route 204 of the to-be-operated area 201 is planned. The operating route panning module 103 analyzes the environmental data to plan the operating route 204 on the to-be-operated area 201.

Step 304: the position of the agricultural machine 202 is monitored. The agricultural machine 202 is monitored by the monitoring device 203 to obtain the real-time position of the agricultural machine 202. Optionally, the agricultural machine 202 is equipped with a positioning system, such as GPS and Beidou to actively provide the position information.

Step 305: whether the agricultural machine 202 enters the to-be-operated area 201 is determined.

Step 306: the operating route 204 corresponding to the to-be-operated area 201 is called.

The monitoring module 104 monitors whether the agricultural machine 202 enters the to-be-operated area 201. If the monitoring module 104 determines that the agricultural machine 202 enters the to-be-operated area 201, step 306 is executed, and the calling module 105 calls the operating route 204 of the to-be-operated area 201, and the agricultural machine 202 operates on the to-be-operated area 201 according to the operating route 204.

Step 307: whether the environmental information is changed is monitored.

The monitoring device 203 obtains the real-time information of the to-be-operated area 201 to update the environmental information of the to-be-operated area 201 in real time. When it is determined that the environmental information of the to-be-operated area 201 is changed at step 307, the step 203 is executed, and the monitoring device 203 obtains the real-time information of the to-be-operated area 201 and generates new environmental data of the to-be-operated area 201. Otherwise, when it is determined that the environmental information of the to-be-operated area 201 is not changed at step 307, then step 301 is executed to continue to obtain the environmental information of the to-be-operated area 201 through the monitoring device 203. That is, the real-time information of the to-be-operated area 201 is obtained through the monitoring device 203, so that the environmental data generated by the environment analyzing module 102 can reflect the latest situation of the to-be-operated area 201. Thus, the operating route 204 planned by the operating route planning module 103 is suitable for the to-be-operated area 201.

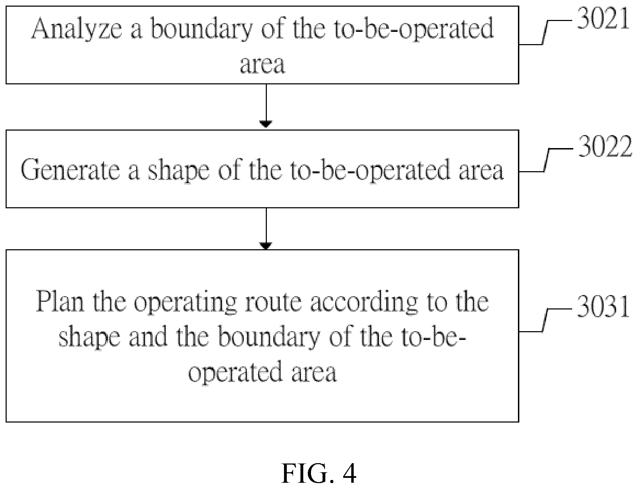

Referring to FIG. 4, in an embodiment, the step 302 further includes following steps.

Step 3021: the boundary of the to-be-operated area 201 is analyzed.

Step 3022: the shape of the to-be-operated area 201 is generated.

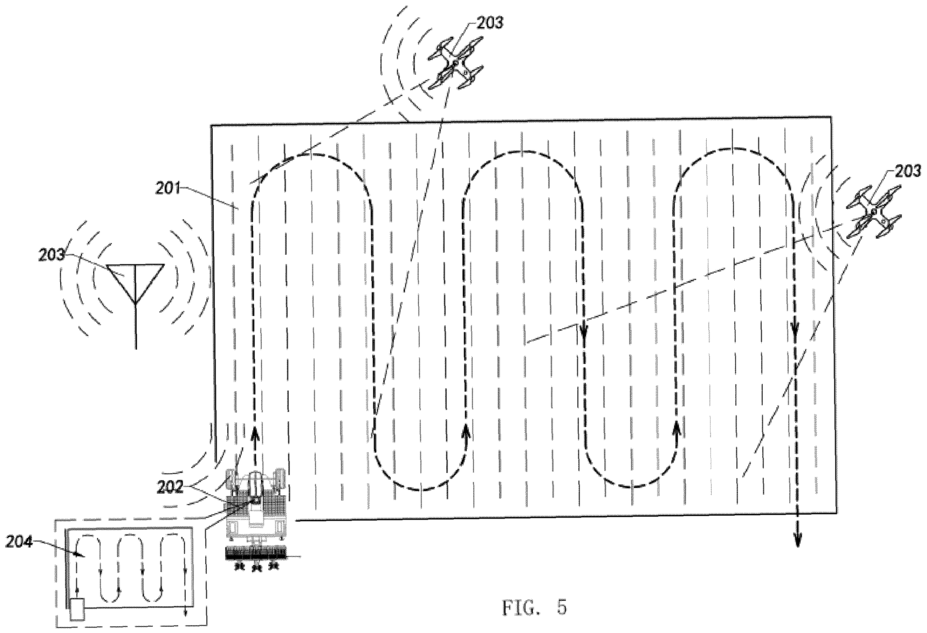

At the step 3021, according to the environmental information generated by the monitoring device 203 that monitors the to-be-operated area 201, the boundary analyzing submodule 1021 identifies the boundary of the to-be-operated area 201, and further analyzes the size of the boundary of the to-be-operated area 201. For example, referring to FIG. 5, the monitoring device 203 monitors the to-be-operated area 201 and obtains the images of the to-be-operated area 201. The boundary analyzing submodule 1021 analyzes the images of the to-be-operated area 201, and identifies a ridge around the to-be-operated area 201 as the boundary. The boundary analyzing submodule 1021 further analyzes the size of the boundary of the to-be-operated area 201. The boundary analyzing submodule 1021 further identifies the length of the ridge that being identified as the boundary of the to-be-operated area 201.

At the step 3022, the boundary analyzing submodule 1021 further analyzes the shape of the to-be-operated area 201 according to the boundary of the to-be-operated area 201. The step 303 further includes step 3031: the operating route 204 is planned according to the shape and the boundary of the to-be-operated area 201. The operating route of the to-be-operated area 201 is planned by the operating route planning module 103.

Referring to FIG. 5, when the ridge is identified as the boundary of the to-be-operated area 201, the shape of the to-be-operated area 201 is identified as square. The planned operation route 204 is that the agricultural machine 202 moves along a boundary section of the square farmland along its extension direction and turns when moving to another boundary section, moves a certain distance along the boundary section, and turns again to another boundary section along its extension direction. The agricultural machine 202 repeats the above actions until it completes the operations on the to-be-operated area 201.

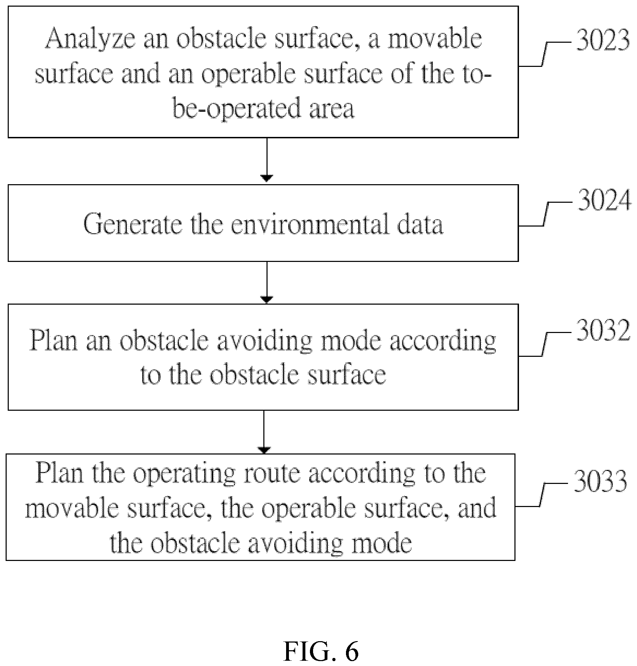

Referring to FIG. 6, in another embodiment, the step 302 includes following steps.

Step 3023: the obstacle surface, the movable surface, and the operable surface of the to-be-operated area 201 are analyzed.

Step 3024: the environmental data is generated.

The step 303 includes following steps.

Step 3032: an obstacle avoiding mode is planned according to the obstacle surface.

Step 3033: the operating route 204 is generated according to the movable surface, the operable surface, and the avoiding mode.

At the step 3023, according to the environmental information of the to-be-operated area 201, the movable surface of the to-be-operated area 201 that can the agricultural machine 202 can move on, the operable surface that requires the agricultural machine 202 to operate on, and the obstacle surface that the agricultural machine 202 cannot pass through. At the step 3024, the environmental data of the to-be-operated area 201 is generated.

The operating route 204 of the agricultural machine 202 on the to-be-operated area 201 is planned according to the movable surface, the operable surface, and the obstacle surface in the environmental data of the to-be-operated area 201. The operating route 204 guides the agricultural machine 202 to move on the movable surface of the to-be-operated area 201 and avoid the obstacle surface. At the step 3032, the obstacle avoiding mode for avoiding the obstacle surface of the to-be-operated area 201 is analyzed, so that the agricultural machine 202 can avoid the obstacle surface.

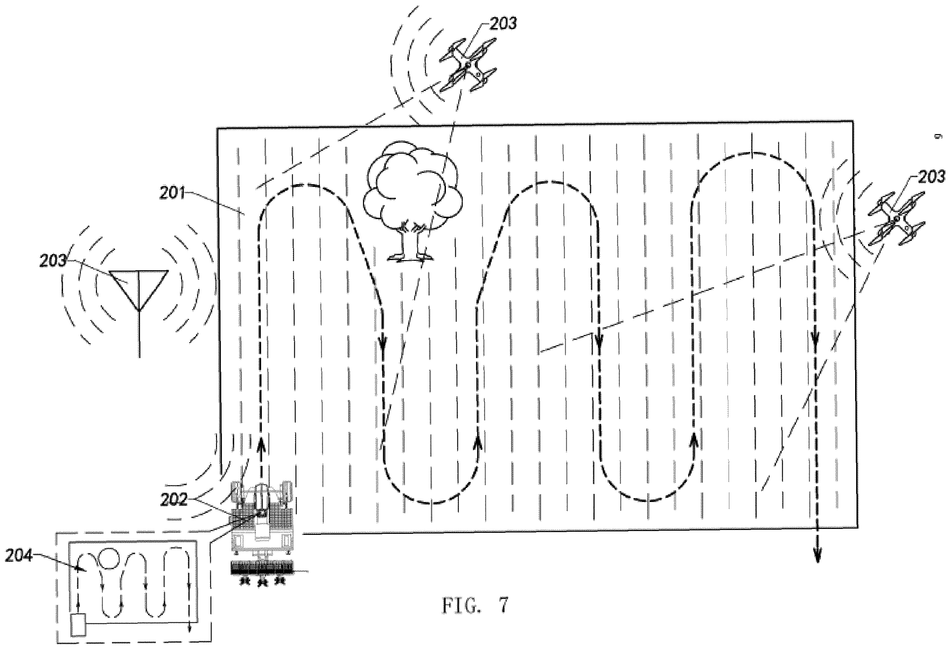

For example, referring to FIG. 7, the monitoring device 203 monitors the to-be-operated area 201 to obtain information of the to-be-operated area 201. At the step 3023, the environmental information of the to-be-operated area 201 is analyzed to determine that a big tree on the to-be-operated area 201, and the obstacle surface of the to-be-operated area 201 is generated accordingly. At the step 3023, the movable surface and the operable surface of the to-be-operated area 201 are identified. At the step 3024, the environmental data is generated. At the step 3032, the obstacle surface of the to-be-operated area 201 and the environmental information around the obstacle surface are analyzed through the environmental data, so as to plan the obstacle avoiding mode for avoiding the obstacle surface. When the obstacle surface of the to-be-operated area 201 has a big tree and the movable surface exits around the obstacle surface, the obstacle avoiding mode is to avoid the obstacle surface and bypass the obstacle surface. At the step 3033, the operating route 204 of the to-be-operated area 201 is generated according to the movable surface, the operable surface, and the obstacle avoiding mode for avoiding the obstacle surface.

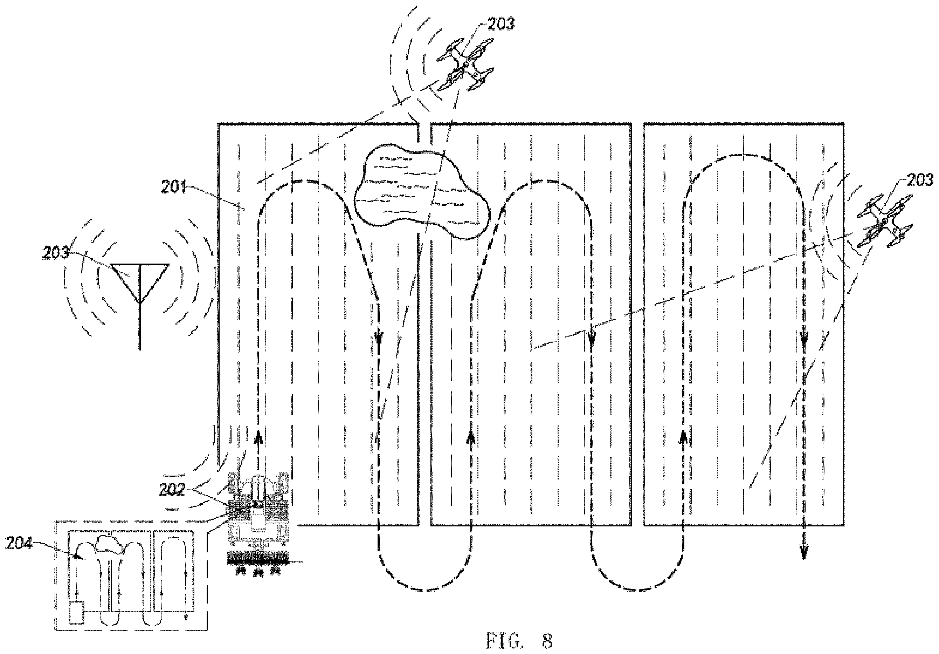

In another embodiment, the operating route planning module 103 plans the operating route 204 according to the boundary of the to-be-operated area 201, the obstacle surface, the operable surface, and the movable surface. Referring to FIG. 8, the monitoring device 203 monitors the to-be-operated area 201, obtains information of the to-be-operated area 201, and analyzes that the to-be-operated area 201 is a square farmland according to the boundary analyzing submodule 1021. The movable surface identifying submodule 1022 identifies the movable surface of the farmland. The operable surface analyzing submodule 1023 identifies the operable surface of the farmland. The obstacle surface generating submodule 1024 identifies a puddle in the farmland to be the obstacle surface. The feedback submodule 1025 feeds back the operable surface, the boundary and the shape of the to-be-operated area 201, and the obstacle surface to the operating route planning module 103. The operating route planning module 103 then plans the operating route 204 that can avoid obstacles based on the boundary and the shape of the to-be-operated area 201, the operable surface, and the obstacle surface. When the monitoring module 104 monitors that the agricultural machine 202 reaches the boundary of the to-be-operated area 201, the calling module 105 calls the operating route 204 of the to-be-operated area 201 for the agricultural machine 202 to executed.

Those skilled in the art should understand that the above description and the embodiments of the present disclosure shown in the drawings are only examples and do not limit the present disclosure. The purpose of the present disclosure has been completely and effectively achieved. The function and structure principle of the present disclosure have been shown and explained in the embodiments. Without departing from the principle, the implementation of the present disclosure may have any deformation or modification.

## Claims

1. A route management system for at least one agricultural machine, **characterized in that**, comprising:
an environment analyzing module configured to analyze environmental information of at least one to-be-operated area and generate environmental data;
an operating route planning module communicatively connected to the environment analyzing module, the operating route planning module configured to plan at least one operating route on the to-be-operated area according to the environmental data.

2. The route management system of claim 1, further comprising:
an environment obtaining module communicatively connected to at least one monitoring device, the monitoring device configured to monitor the to-be-operated area, the environment obtaining module configured to obtain the environmental information of the to-be-operated area from the monitoring device, and send the environmental information to the environment analyzing module.

3. The route management system of claim 2, **characterized in that**, the environment analyzing module comprising:
a boundary analyzing submodule configured to identify a boundary of the to-be-operated area according to the environmental information of the to-be-operated area from the environment obtaining module, and the boundary analyzing submodule further configured to analyze a shape of the to-be-operated area and a size of the boundary.

4. The route management system of claim 2, **characterized in that**, the environment analyzing module comprising:
a movable surface identifying submodule configured to identify a movable surface on the to-be-operated area according to the environmental information of the to-be-operated area from the environment obtaining module.

5. The route management system of claim 2, **characterized in that**, the environment analyzing module comprises:
an operable surface analyzing submodule configured to identify an operable surface of the to-be-operated area according to the environmental information of the to-be-operated area from the environment obtaining module.

6. The route management system of claim 2, **characterized in that**, the environment analyzing module comprises:
an obstacle surface generating submodule configured to generate an obstacle surface of the to-be-operated area according to the environmental information of the to-be-operated area from the environment obtaining module.

7. The route management system of claim 3, **characterized in that**, the environment analyzing module comprises:
a feedback submodule configured to obtain the shape of the to-be-operated area and the size of the boundary from the boundary analyzing submodule, obtain the moving surface from the moving surface identifying submodule, obtain the operable surface from the operable surface analyzing submodule, obtain the obstacle surface from the obstacle surface generating submodule, and generate the environmental data of the to-be-operated area accordingly; the feedback submodule further configured to feedback the environmental data to the operating route planning module.

8. The route management system of claim 6, **characterized in that**, the environment analyzing module comprising:
a feedback submodule configured to obtain the shape of the to-be-operated area and the size of the boundary from the boundary analyzing submodule, obtain the moving surface from the moving surface identifying submodule, obtain the operable surface from the operable surface analyzing submodule, obtain the obstacle surface from the obstacle surface generating submodule, and generate the environmental data of the to-be-operated area accordingly;
the feedback submodule further configured to feedback the environmental data to the operating route planning module.

9. The route management system of claim 7, **characterized in that**, the operating route planning module is configured to obtain the shape of the to-be-operated area and the size of the boundary, and the operating route planning module is configured to plan the operating route according to the shape of the to-be-operated area and the size of the boundary.

10. The route management system of claim 8, **characterized in that**, the operating route planning module is configured to obtain the shape of the to-be-operated area and the size of the boundary, and the operating route planning module is configured to plan the operating route according to the shape of the to-be-operated area and the size of the boundary.

11. The route management system of claim 7, wherein the operating route planning module is configured to analyze an obstacle avoiding mode according to the obstacle surface of the environmental data, and plan the operating route of the to-be-operated area.

12. The route management system of claim 8, **characterized in that**, the operating route planning module is configured to analyze an obstacle avoiding mode according to the obstacle surface of the environmental data, and plan the operating route of the to-be-operated area.

13. The route management system of claim 7, **characterized in that**, the operating route planning module plans the operating route on the to-be-operated area according to the environmental data.

14. The route management system of claim 8, **characterized in that**, the operating route planning module plans the operating route on the to-be-operated area according to the environmental data.

15. The route management system of claim 1, further comprising:
a monitoring module configured to monitor a position of the agricultural machine, and obtain the to-be-operated area according to the position of the agricultural machine.

16. The route management system of claim 2, further comprising:
a calling module communicatively connected to the monitoring module, the calling module configured to obtain the position of the agricultural machine and the to-be-operated area, when the monitoring module monitors that the agricultural machine reaches the to-be-operated area, the calling module is further configured to call the operating route to be executed by the agricultural machine.

17. A route management method for at least one agricultural machine, **characterized in that**, comprising:
(A) generating environmental data based on environmental information of at least one to-be-operated area; and
(B) planning at least one operating route on the to-be-operated area according to the environmental data.

18. The route management method of claim 17, **characterized in that**, the step (A) comprises:
obtaining the environmental information of the to-be-operated area by at least one monitoring device;
identify the boundary of the to-be-operated area;
analyzing the shape of the to-be-operated area and the size of the boundary; and
generating the environmental data of the to-be-operated area.

19. The route management method of claim 18, **characterized in that**, the step (B) comprises:
planning the operation route according to the shape of the to-be-operated area and the size of the boundary.

20. The route management method of claim 17, **characterized in that**, the step (A) comprises:
obtain the environmental information of the to-be-operated area through at least one monitoring device;
identify an obstacle surface, a movable surface, and an operable surface of the to-be-operated area; and
generating the environmental data.

21. The route management method of claim 20, **characterized in that**, the step (B) comprises:
planning at least one obstacle avoiding mode according to the obstacle surface; and
generating the operating route.
